# EUROPÄISCHE PATENTSCHRIFT

(11) **EP 3 041 711 B1**
(45) Veröffentlichungstag und Bekanntmachung des Hinweises auf die Patenterteilung: **09.10.2019**
(21) Anmeldenummer: 14789985.0
(22) Anmeldetag: 29.08.2014
(51) Int. Cl.: B60R 1/00, G06K 9/00

(54) **KAMERA-BASIERTE ERKENNUNG EINES AN EINEM FAHRZEUG MONTIERBAREN ANBAUTEILES**
CAMERA BASED DETECTION OF A PART MOUNTED ON A VEHICLE
DETECTION PAR CAMÉRA D'UN ÉLÉMENT MONTÉ SUR UN VÉHICULE

(30) Priorität: 04.09.2013 DE 102013217648
(43) Veröffentlichungstag der Anmeldung: 13.07.2016
(73) Patentinhaber: Conti Temic Microelectronic GmbH, 90411 Nürnberg (DE)
(72) Erfinder: RANDLER, Martin, 88090 Immenstaad (DE); GREWE, Ralph, 88131 Lindau (DE); FISCHER, Marc, 88149 Nonnenhorn (DE); ULBRICHT, Dirk, 88239 Wangen (DE)
(86) Internationale Anmeldenummer: PCT/DE2014/200433
(87) Internationale Veröffentlichungsnummer: WO 2015/032397

(56) Entgegenhaltungen:
- WO-A1-2013/034141
- WO-A1-2013/085985
- DE-A1- 10 227 221
- DE-A1-102006 017 452
- DE-A1-102012 010 126
- DE-B4-102010 006 323
- KR-A- 20040 092 568
- US-A1- 2007 262 574
- US-A1- 2009 091 436
- US-A1- 2013 129 144

## Beschreibung

Die Erfindung betrifft eine Kamera-basierte Erkennung eines an einem Fahrzeug montierbaren Anbauteiles, insbesondere eines Trägersystems und/oder einer Ladung des Trägersystems, wie beispielsweise eines Dachgepäck- oder Heckradträgers.

Seit einigen Jahren sind insbesondere Trägersysteme für die Montage beispielsweise auf Dächern, an Heckklappen und auf Anhängekupplungen von Kraftfahrzeugen (KFZ) als Anbauteile bzw. als KFZ-Zubehör erhältlich. Während die Träger für die Anhängekupplung elektrisch mit dem Fahrzeug verbunden sind und somit für das Fahrzeug eine "Änderung am Fahrzeugheck" erkennbar ist, sind Träger für die Heckklappe für die Fahrzeuge bisher nicht erkennbar. Neben den genannten Trägersystemen gibt es noch weitere Anbauteile für Fahrzeuge, die ebenfalls nachträglich, insbesondere nach Herstellung und Auslieferung des Fahrzeugs durch den Fahrzeughersteller, am Fahrzeug montiert oder auch ausgetauscht werden können, Unter Anbauteile fallen neben den Trägersystemen beispielsweise auch Außen- bzw. Seitenspiegel, insbesondere verlängerte Spiegel für den Betrieb des Fahrzeugs mit einem Anhänger, sowie nachrüstbare Scheinwerfersysteme, Seitenschweller, Radkästen, Anhängerkupplungen, Front- oder Heckschürzen, Front- oder Heckspoiler, Auspuffanlagen, Stoßfänger, Antennen, Fahrzeugreifen, Vorrichtungen zur Spurverbreiterung, z.B. mittels Distanzscheiben. Derartige Anbauteile sind ebenfalls nicht für das Fahrzeug erkennbar.

Im Automobilbereich werden weiterhin zunehmend Kameras eingesetzt, um das Umfeld zu beobachten. Die "Beobachtung" erfolgt teilweise elektronisch, insbesondere mit Hilfe von Bildverarbeitung, oder durch den Fahrer, dem die Bilder der Kameras über einen Bildschirm angezeigt werden.

Die DE10227221A1 beschreibt ein Verfahren zur Überwachung des Innen- und Außenraums eines Fahrzeugs sowie ein Fahrzeug mit wenigstens einer Rundsichtkamera. Durch die umfassende Aufnahme der Bilddaten der Rundsichtkamera ist ein sehr sicheres Erfassen und Selektieren eines oder mehrerer relevanter Bereiche von besonderem Interesse möglich, ohne dass einzelne Bereiche, die für eine Fahrentscheidung von Bedeutung sein können, übersehen und nicht berücksichtigt werden können.

Die DE102009038552A1 befasst sich mit der Erkennung eines an ein Fahrzeug angehängten Anhängers. Hierzu wird der Winkel zwischen der Längsachse des Fahrzeugs und der Längsachse des Anhängers, d.h. der Knickwinkel bezüglich der Anhängerkupplung des Fahrzeugs ermittelt. Abhängig vom erkannten Knickwinkel wird erkannt, ob an der Anhängerkupplung ein Anhänger befestigt ist.

Seit einigen Jahren werden in Fahrzeugen zudem vermehrt Fahrerassistenzsysteme eingesetzt. Mittels vorzugsweise optischer Erfassung der Fahrzeugumgebung sowie mittels spezieller elektronischer Einrichtungen und Software können diese Systeme verschiedene fahrerunterstützende Funktionen übernehmen. Einige dieser Assistenzsysteme sind bereits in der Lage autonome oder teilautonome Fahrmanöver durchzuführen, beispielsweise Einpark- und/oder Ausparkmanöver.

Ein System zur Einparkunterstützung ist beispielsweise aus der DE 10 2009 057 837 A1 bekannt. Das System dient in diesem Fall zur Unterstützung des Fahrers beim Einparken in eine Parkfläche einer Fahrzeuggarage.

Die WO2013/034141 A1 betrifft eine Vorrichtung und ein Verfahren, zur Bestimmung einer Stellung eines oder mehrerer Bauelemente eines Fahrzeugs, die in Ihrer Stellung verändert werden können und bei denen eine Veränderung der Stellung eine Änderung von äußeren Abmessungen des Fahrzeugs bewirkt.

Die KR 10 2004 002568 A betrifft ein vollautomatisiertes Produktionsüberwachungssystem mit einem Auftragssystem und einem Qualitätssystem, wobei das Qualitätssystem stationär angeordnete Kameras sowie einen Controller und Lichtschranken aufweist.

Insbesondere bei Assistenzsystemen, die zur Durchführung von autonomen oder teilautonomen Fahrmanövern dienen, beispielsweise von Einpark- oder Ausparkmanöver, liegt jedoch eine hohe Prozessverantwortung bei diesen Systemen. Es muss zu jeder Zeit während eines autonomen oder teilautonomen Fahrmanövers sichergestellt sein, dass andere Verkehrsteilnehmer (z.B. Passanten) nicht gefährdet werden und dass keine Schäden am eigenen oder an anderen Fahrzeugen entstehen. Hierfür müssen beispielsweise die äußeren Abmessungen bzw. die Dimensionen des Fahrzeugs bekannt sein. Weiterhin muss sichergestellt sein, dass die Sensorsysteme, die zur Erfassung des Fahrzeugumfeldes dienen, einwandfrei arbeiten können.

Die Montage von Anbauteilen am Fahrzeug, insbesondere bei den einleitend erwähnten nachträglich bzw. zusätzlich verbauten Anbauteilen, kann es zu einer Veränderung der äußeren Fahrzeugabmessungen, insbesondere der Höhe, Länge und Breite des Fahrzeugs, sowie zu einer Beeinträchtigung der Erfassung der Fahrzeugumgebung mittels der Sensorsysteme kommen. Eine solche Beeinträchtigung liegt beispielweise dann vor, wenn der Erfassungsbereich des Sensorsystems durch das Anbauteil und/oder, wenn es sich bei dem Anbauteil um ein Trägersystem handelt, durch eine Ladung des Trägersystems verdeckt ist. Daher ist es nicht nur für den Fahrzeugführer sondern insbesondere auch für die sichere Funktionsumsetzung von Fahrerassistenzsystemen wichtig, dass diesen eine Information über das Vorhandensein montierter Anbauteile sowie deren Einfluss auf den Fahrbetrieb bzw. für die Durchführung von Fahrerassistenzfunktionen zur Verfügung gestellt wird.

Aufgabe der vorliegenden Erfindung ist es nun, eine zuverlässige Erkennung eines an einem Fahrzeug montierbaren Anbauteiles zu schaffen.

Diese Aufgabe wird durch die Gegenstände des unabhängigen Anspruchs gelöst. Weitere Ausgestaltungen der Erfindung ergeben sich aus den abhängigen Ansprüchen.

Eine der Erfindung zugrunde liegende Idee basiert darauf, mit Hilfe einer oder mehrerer Kameras einen Bereich des Fahrzeugs zu erfassen, an dem ein Anbauteil, wie beispielsweise ein Trägersystem, montiert sein kann, und den erfassten Bereich hinsichtlich charakteristischer Merkmale eines Anbauteils zu analysieren. Abhängig von der Analyse kann dann ein im erfassten Bereich montiertes Anbauteil erkannt werden.

Eine Ausführungsform der Erfindung betrifft nun ein Verfahren zur Kamera-basierten Erkennung eines an einem Fahrzeug montierbaren Anbauteiles mit den folgenden Schritten: Erfassen eines Bereichs des Fahrzeugs, an dem ein Anbauteil montiert sein kann, mit mindestens einer Kamera, Analysieren der von der mindestens einen Kamera erzeugten Bilder des erfassten Bereichs hinsichtlich charakteristischer Merkmale eines Anbauteiles, und Erkennen eines im erfassten Bereich montierten Anbauteiles abhängig von der Analyse.

Das Analysieren der von der mindestens einen Kamera erzeugten Bilder des erfassten Bereichs hinsichtlich charakteristischer Merkmale eines Anbauteiles kann das Suchen nach Bildbereichen mit Bewegung in den von der mindestens einen Kamera erzeugten Bildern des erfassten Bereichs mittels eines Optischen-Fluss-Verfahrens aufweisen.

Das Suchen nach Bildbereichen mit Bewegung in den von der mindestens einen Kamera erzeugten Bildern des erfassten Bereichs mittels eines Optischen-Fluss-Verfahrens kann folgende Schritte aufweisen: Einteilen der Bilder in Teilbereiche, für jeden Teilbereich Erfassen, ob innerhalb einer vorgegebenen Zeitdauer Bewegung erkannt wurde oder nicht, und Erzeugen von Bildern mit Bewegungsintensität basierend auf dem vorhergehenden Schritt des Erfassens.

Das Analysieren der von der mindestens einen Kamera erzeugten Bilder des erfassten Bereichs hinsichtlich charakteristischer Merkmale eines Anbauteiles kann ferner folgende Schritte aufweisen: Erkennen von Bereichen ohne Bewegung in den Bildern mit Bewegungsintensität, Klassifizieren der erkannten Bereiche ohne Bewegung hinsichtlich charakteristischer Merkmale eines Anbauteiles.

Das Erkennen eines im erfassten Bereich montierten Anbauteiles abhängig von der Analyse kann das Auswerten der hinsichtlich charakteristischer Merkmale eines Anbauteiles klassifizierten Bereiche ohne Bewegung auf Konturen eines Anbauteiles und/oder, insbesondere wenn es sich bei dem Anbauteil um ein Trägersystem handelt, auf Konturen einer Ladung des Trägersystems aufweisen.

Weiterhin kann das Erkennen eines im erfassten Bereich montierten Anbauteiles derart erfolgen, dass die Mittels des Optischen-Fluss-Verfahrens analysierten Bilder bzw. eine derart analysierte Bilderfolge, mit Bildern bzw. einer Bilderfolge verglichen werden, die zu einem früheren Zeitpunkt aufgenommen und ebenfalls mittels dem Optischen-Fluss-Verfahren analysiert wurden. Beispielsweise durch Bildung eines Differenzbildes kann dann ermittelt werden, ob zwischen der vorangegangenen und der aktuellen Bildaufnahme neue Bereiche ohne Bewegung in den Bildern hinzugekommen sind. Sind neue Bildbereiche ohne Bewegung hinzugekommen kann daraus ermittelt werden, dass zwischen der Aufnahme der früheren Bilder bzw. der früheren Bilderfolge und dem aktuellen Zeitpunkt der Bildaufnahme an dem entsprechenden Bereich des Fahrzeugs ein Anbauteil montiert wurde. Eine derartige Vergleichs- bzw. Differenzbildanalyse kann beispielsweise bei jedem Fahrzeugstart erfolgen, um zu Ermitteln, ob während der Standzeit des Fahrzeug neue Anbauteile am Fahrzeug montiert wurden und/oder, wenn es sich bei dem Anbauteil um ein Trägersystem handelt, ob das Trägersystem beladen wurde. Umgekehrt kann auf analoge Weise ermittelt werden, ob zwischen der früheren und der aktuellen Bildaufnahme neue Bildbereiche mit Bewegung hinzugekommen sind, woraus dann entsprechend auf eine Demontage bzw. auf eine Entladung eines Anbauteiles geschlossen werden kann.

Alternativ oder auch zusätzlich zur Anwendung eines Optischen-Fluss-Verfahrens zur Bewegungserkennung kann das Analysieren der von der mindestens einen Kamera erzeugten Bilder des erfassten Bereichs hinsichtlich charakteristischer Merkmale eines Anbauteiles auch folgenden Schritt aufweisen: Klassifizieren der von der mindestens einen Kamera erzeugten Bilder oder von Bereichen dieser Bilder hinsichtlich charakteristischer Merkmale eines Anbauteiles, und das Erkennen eines im erfassten Bereich montierten Anbauteiles abhängig von der Analyse kann das Auswerten der hinsichtlich charakteristischer Merkmale eines Anbauteiles klassifizierten Bereiche auf Konturen eines Anbauteiles und/oder, insbesondere wenn es sich bei dem Anbauteil um ein Trägersystem handelt, auf Konturen einer Ladung des Trägersystems aufweisen. Das Klassifizieren kann von einem Klassifikator durchgeführt werden, der mit Bildern einer Vielzahl von Anbauteilen oder Varianten davon trainiert wurde, um charakteristische Merkmale von Anbauteilen zu finden, die bewegungsunabhängig sind.

Das Erkennen eines im erfassten Bereich montierten Anbauteiles abhängig von der Analyse kann ferner das Erkennen von Änderungen der Konturen eines Anbauteiles und/oder, insbesondere wenn es sich bei dem Anbauteil um ein Trägersystem handelt, der Konturen einer Ladung des Trägersystems aufweisen.

Das Erkennen eines im erfassten Bereich montierten Anbauteiles abhängig von der Analyse kann ferner das Auswerten der hinsichtlich charakteristischer Merkmale eines Anbauteiles klassifizierten Bereiche ohne Bewegung auf durch ein Anbauteil und/oder, insbesondere wenn es sich bei dem Anbauteil um ein Trägersystem handelt, durch eine Ladung eines Trägersystems verdeckte Bereiche des Fahrzeugs aufweisen.

Das Verfahren kann ferner gekennzeichnet sein durch den Schritt des Zurverfügungstellens von durch ein Anbauteil und/oder, insbesondere wenn es sich bei dem Anbauteil um ein Trägersystem handelt, durch eine Ladung eines Trägersystems verdeckte Bereiche des Fahrzeugs für Fahrzeugfunktionen, insbesondere eine Funktionseinschränkung eines Fahrerassistenzsystems abhängig von den verdeckten Bereichen.

Die vorliegende Erfindung eignet sich insbesondere zum Einsatz in einem Fahrerassistenzsystem.

Weitere Vorteile und Anwendungsmöglichkeiten der vorliegenden Erfindung ergeben sich aus der nachfolgenden Beschreibung in Verbindung mit dem/den in der/den Zeichnung(en) dargestellten Ausführungsbeispiel(en).

In der Beschreibung, in den Ansprüchen, in der Zusammenfassung und in der/den Zeichnung(en) werden die in der hinten angeführten Liste der Bezugszeichen verwendeten Begriffe und zugeordneten Bezugszeichen verwendet.

Die Zeichnung(en) zeigt/zeigen in
- Fig. 1: ein Flussdiagramm eines Ausführungsbeispiels eines Verfahrens zur Kamera-basierten Erkennung eines an einem Fahrzeug montierbaren Anbauteiles und
- Fig. 2: ein Blockschaltbild eines Ausführungsbeispiels einer Vorrichtung zur Kamera-basierten Erkennung eines an einem Fahrzeug montierbaren Anbauteiles.

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen.

Die nachfolgende Beschreibung bezieht sich im Wesentlichen auf die Erkennung eines Heck- oder Heckrad-Trägers, der am Heck eines KFZ montiert werden kann und zur Halterung und Transport von Fahrrädern mit dem KFZ dient. Prinzipiell eignet sich die Erfindung allerdings zur Erkennung von nahezu allen an Fahrzeugen montierbaren Anbauteilen.

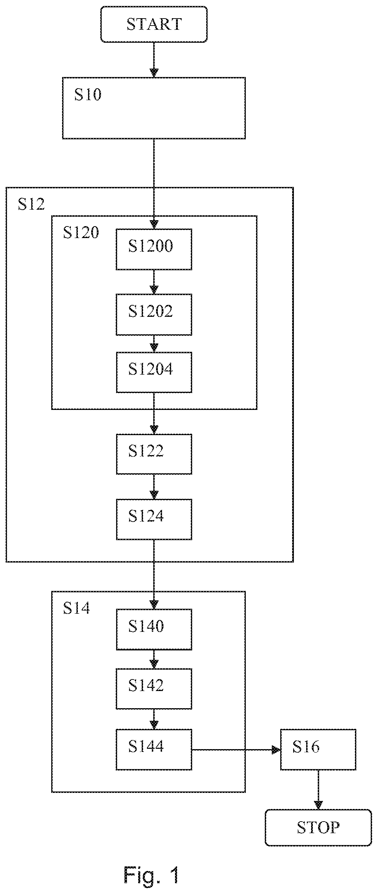

Es wird nun ein erfindungsgemäßes Erkennungsverfahren für Heckträger und ihrer Ladung unter Bezug auf das in Fig. 1 gezeigte Flussdiagramm erläutert. Nach der Erfindung ist vorgesehen, dass der Bereich, in dem ein Heckträger (unabhängig von der Montageart) am Fahrzeug montiert ist, von mindestens einer Kamera überwacht wird (Schritt S10 in Fig. 1). Die Kamera kann beispielsweise im Fahrzeuginnenraum am Dach oder auf der Heckablage montiert und auf das Heckfenster des Fahrzeugs ausgerichtet sein, um durch das Heckfenster den Bereich bildlich zu erfassen, in dem typischerweise ein Heckträger am Fahrzeug montiert ist. Prinzipiell reicht es aus, eine Bereich zu erfassen, in sich ein am Fahrzeug montierter Heckträger zumindest teilweise befindet. Es kann natürlich auch ein derart großer Bereich erfasst werden, dass der vollständige Heckträger samt Ladung erfasst wird. Der erfasste Bereich sollte ferner derart gewählt sein, dass ohne montierten Heckträger das hintere Umfeld des Fahrzeugs, das ein Fahrer durch den zentralen Rückspiegel sehen kann, zumindest teilweise erfasst wird, insbesondere um Bewegungen in den von der Kamera erfassten Bildern erkennen zu können.

Die von der Kamera erzeugten Bilder werden hinsichtlich charakteristischer Merkmale eines Anbauteiles in dem von der Kamera erfassten Bereich analysiert und anschließend wird abhängig von der Analyse ein im erfassten Bereich montierter Heckträger erkannt (Schritte S12 und S14 in Fig. 1).

Im Rahmen der Analyse wird auf den Bildern der mindestens einen Kamera nach Bewegung gesucht. Diese kann mit einem "Optischen Fluss"-Verfahren erfolgen (Schritt S120 in Fig. 1). Die Existenz von Bewegung in einem Bildbereich lässt darauf schließen, dass dieser nicht von einem fest mit dem Fahrzeug verbundenen Teil verdeckt ist. Zur Erkennung des Trägers und seiner Ladung wird das Bild in Teilbereiche eingeteilt (Schritt S1200 in Fig. 1) und für jeden Teilbereich wird erfasst, ob in ihm in der letzten Zeit (diese sollte viel größer als ein Bild sein) Bewegung erkannt wurde oder nicht (Schritt S1202 in Fig. 1). Auf diese Weise kann ein weiteres Bild erzeugt werden, das nicht die Helligkeit sondern die Bewegungsintensität als Wert hat (Schritt S1204 in Fig. 1). Alternativ oder auch zusätzlich zur Bewegungs-basierten Analyse kann auch eine Aufteilung eines Kamerabildes in Bereiche durchgeführt werden, ohne dass ein "Optisches-Fluss"-Verfahren zur Bewegungserkennung eingesetzt wird. Diese Aufteilung kann mit geringem technischem Aufwand durchgeführt werden, beispielsweise indem das Bild einfach in gleich große Bereiche aufgeteilt wird (entsprechend einer Rasterung).

Auf diesem Bild erfolgt dann die eigentliche Erkennung des Trägers und der Ladung z.B. durch Klassifikation. Hierzu können Bereiche ohne Bewegung in den Bildern mit Bewegungsintensität erkannt werden (Schritt S122 in Fig. 1), und die erkannten Bereiche ohne Bewegung können hinsichtlich charakteristischer Merkmale eines Heckträgers mit/oder ohne Ladung klassifiziert werden (Schritt S124 in Fig. 1). Sofern bei der vorhergehenden Analyse keine Bewegungserkennung mit einem "Optischen-Fluss"-Verfahren durchgeführt wurde, kann die Erkennung des Trägers und der Ladung durch eine Klassifikation der Bilder oder jedes Bereichs nach einer Aufteilung der Bilder in Bereiche beispielsweise basierend auf dem Erkennen von Strukturen erfolgen, die für den Träger oder eine Ladung charakteristisch sind, wie bestimmte typische Strukturen in den Bereichen, die von einem Träger oder Trägersystem stammen, wie beispielsweise gerade längliche Elemente wie Träger-Streben oder -Stangen.

Für die Klassifikation kann ein Klassifikator eingesetzt werden, der mit Bildern einer Vielzahl von Anbauteilen, insbesondere von Trägersystemen oder Varianten davon, trainiert wurde. Durch das Training findet und "lernt" der Klassifikator charakteristische Merkmale von Anbauteilen, die bewegungsunabhängig sind. Diese Merkmale speichert der Klassifikator für eine Klassifikation beispielsweise im Verfahrensschritt S122. Durch diese Art der Klassifikation kann auch ohne Bewegungserkennung mit einem "Optischen-Fluss"-Verfahren ein Anbauteil erkannt werden. Diese Art der Kamera-basierten Anbauteil-Erkennung kann alternativ oder zusätzlich zu einer Bewegungserkennung mit einem "Optischen-Fluss"-Verfahren eingesetzt werden.

Der abschließende Schritt des Erkennens weist dann das Auswerten so klassifizierter Bereiche auf Konturen eines Heckträgers und/oder Konturen einer Ladung eines Heckträgers auf (Schritt S14 in Fig. 1). Insbesondere kann dieser Schritt ferner das Erkennen von Änderungen der Konturen eines Heckträgers und/oder Konturen einer Ladung des Heckträgers aufweisen (Schritt S142 in Fig. 1). Weiterhin kann dieser Schritt ein Auswerten der hinsichtlich charakteristischer Merkmale eines Anbauteiles klassifizierten Bereiche ohne Bewegung auf durch ein Anbauteil und/oder, insbesondere wenn es sich bei dem Anbauteil um ein Trägersystem handelt, durch eine Ladung eines Trägersystems verdeckte Bereiche des Fahrzeugs aufweisen (Schritt S144 in Fig. 1). Das Ergebnis dieser Schritte ist das Erkennungsergebnis inkl. einer Information, ob sich die Kontur des Trägers und der Ladung geändert hat, und die Position des Trägers und der Ladung.

Durch eine grobe Änderung der Konturen kann ein Verlust oder eine Lockerung (=Positionsänderung) des Trägers und der Ladung erkannt und z.B. dem Fahrer mitgeteilt werden.

Die Information darüber, welche Bildbereiche verdeckt sind, kann anderen Funktionen zur Verfügung gestellt werden (Schritt S16 in Fig. 1). Diese Funktionen können dann ihre Funktionseinschränkung aufgrund der Verdeckung bewerten und entsprechend reagieren (z. B. Eigenüberwachung).

Das oben beschriebene Verfahren kann als Computerprogramm implementiert sein, das von einem Rechner ausgeführt wird, der die in Fig. 1 gezeigten Schritte des Verfahrens ausführt. Dem Rechner werden als Eingabe die von der mindestens einen Kamera erfassten Bilder zu weiteren Verarbeitung durch das Verfahren zugeführt. Der Rechner kann durch ein Steuergerät eines Fahrzeugs oder auch eines Fahrerassistenzsystems implementiert sein. Das erfindungsgemäße Verfahren kann auch als Teil einer Fahrerassistenzsoftware implementiert sein. Der in Fig. 1 in Form eines Flussdiagramms gezeigte Verfahrensablauf kann in der Praxis zyklisch oder periodisch oder auch nur einmal oder zweimal während einer Fahrt ausgeführt werden.

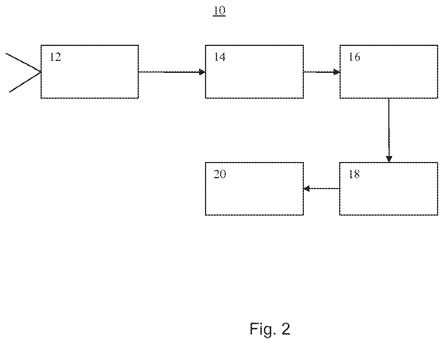

Fig. 2 zeigt ein Blockdiagramm einer entsprechenden Vorrichtung 10 zur Kamera-basierten Erkennung eines an einem Fahrzeug montierbaren Anbauteiles. Eine oder mehrere Kameras 12 erfassen einen Bereich eines Fahrzeugs, in dem ein Anbauteil am Fahrzeug montiert sein kann.

Die von der oder den Kameras 12 erzeugten insbesondere digitalen Bilddaten werden Optischer-Fluss-Berechnungsmitteln 14 zugeführt, welche im Prinzip den Schritt S120 des Verfahrens von Fig. 1 implementieren.

Die Ausgangsdaten der Mittel 14 werden Bewegungsintensitätsbild-Aufbaumitteln 16 zugeführt, die im Prinzip die Schritte S1200, S1202, S1204 und ggf. S122 und S124 des in Fig. 1 gezeigten Verfahrens implementieren.

Die von den Mitteln 14 erzeugten Bewegungsintensitätsbilder werden Anbauteilerkennungsmitteln 18 zugeführt, die im Prinzip den Schritt S140 und ggf. die Schritte S142 und S144 des Verfahrens von Fig. 1 implementieren. Als Ausgabedaten erzeugen die Mittel 18 den Erkennungsstatus und die Position eines erkannten Anbauteiles und, insbesondere wenn es sich bei dem Anbauteil um ein Trägersystem handelt, einer erkannten Ladung.

Diese Ausgabedaten können von einer Fahrerassistenzsystem-Funktionssteuerung 20 weiter verarbeitet werden, beispielsweise um eine Funktionseinschränkung eines Fahrerassistenzsystems aufgrund der Verdeckung durch das erkannte Anbauteil und, insbesondere wenn es sich bei dem Anbauteil um ein Trägersystem handelt, durch die erkannte Ladung zu bewerten und ggf. eine entsprechende Reaktion einzuleiten, wie beispielsweise ein Abschalten von Fahrerassistenzfunktionen in den verdeckten Bereichen des Fahrzeugs.

### Bezugszeichen

- 10: Vorrichtung zur Kamera-basierten Erkennung eines an einem Fahrzeug montierbaren Anbauteiles
- 12: Kamera
- 14: Optischer-Fluss-Berechnungsmittel
- 16: Bewegungsintensitätsbild-Aufbaumittel
- 18: Anbauteilerkennungsmittel
- 20: Fahrerassistenzsystem-Funktionssteuerung

## Patentansprüche

1. Verfahren zur Kamera-basierten Erkennung eines an einem Fahrzeug nachträglich bzw. zusätzlich montierbaren Anbauteiles mit den folgenden Schritten:
- Erfassen (S10) eines Bereichs des Fahrzeugs, an dem ein Anbauteil montiert sein kann, mit mindestens einer Kamera,
- Analysieren (S12) der von der mindestens einen Kamera erzeugten Bilder des erfassten Bereichs hinsichtlich charakteristischer Merkmale eines Anbauteiles, und
- Erkennen (S14) eines im erfassten Bereich montierten Anbauteiles abhängig von der Analyse, **dadurch gekennzeichnet,**
**dass** das Erkennen des an dem Fahrzeug montierbaren Anbauteils, das Erkennen eines im erfassten Bereich montierten Trägersystem und/oder einer Ladung des/eines Trägersystems umfasst,
**dass** das Analysieren (S12) der von der mindestens einen Kamera erzeugten Bilder des erfassten Bereichs hinsichtlich charakteristischer Merkmale eines Anbauteiles das Suchen (S120) nach Bildbereichen mit Bewegung in den von der mindestens einen Kamera erzeugten Bildern des erfassten Bereichs mittels eines Optischen-Fluss-Verfahrens aufweist,
**dass** das Suchen (S120) nach Bildbereichen mit Bewegung in den von der mindestens einen Kamera erzeugten Bildern des erfassten Bereichs mittels eines Optischen-Fluss-Verfahrens folgende Schritte aufweist:
- Einteilen (S1200) der Bilder in Teilbereiche,
- für jeden Teilbereich Erfassen (S1202), ob innerhalb einer vorgegebenen Zeitdauer Bewegung erkannt wurde oder nicht, und
- Erzeugen (S1204) von Bildern mit Bewegungsintensität basierend auf dem vorhergehenden Schritt des Erfassens, und
**dass** das Analysieren (S12) der von der mindestens einen Kamera erzeugten Bilder des erfassten Bereichs hinsichtlich charakteristischer Merkmale eines Anbauteiles ferner folgende Schritte aufweist:
- Erkennen (S122) von Bereichen ohne Bewegung in den Bildern mit Bewegungsintensität,
- Klassifizieren (S124) der erkannten Bereiche ohne Bewegung hinsichtlich charakteristischer Merkmale eines Anbauteiles.

2. Verfahren nach Anspruch 1,
**dadurch gekennzeichnet, dass**
das Erkennen (S14) eines im erfassten Bereich montierten Anbauteiles abhängig von der Analyse das Auswerten (S140) der hinsichtlich charakteristischer Merkmale eines Anbauteiles klassifizierten Bereiche ohne Bewegung auf Konturen eines Anbauteiles und/oder, wenn es sich bei dem Anbauteil um ein Trägersystem handelt, auf Konturen einer Ladung des Trägersystems aufweist.

3. Verfahren nach einem der vorhergehenden Ansprüche,
**dadurch gekennzeichnet, dass**
das Analysieren der von der mindestens einen Kamera erzeugten Bilder des erfassten Bereichs hinsichtlich charakteristischer Merkmale eines Anbauteiles ferner den folgenden Schritt aufweist:
Klassifizieren der von der mindestens einen Kamera erzeugten Bilder oder von Bereichen dieser Bilder hinsichtlich charakteristischer Merkmale eines Anbauteiles,
und wobei das Erkennen eines im erfassten Bereich montierten Anbauteiles abhängig von der Analyse das Auswerten der hinsichtlich charakteristischer Merkmale eines Anbauteiles klassifizierten Bereiche auf Konturen eines Anbauteiles und/oder, wenn es sich bei dem Anbauteil um ein Trägersystem handelt, auf Konturen einer Ladung des Trägersystems aufweist.

4. Verfahren nach einem der vorhergehenden Ansprüche,
**dadurch gekennzeichnet, dass**
das Erkennen (S14) eines im erfassten Bereich montierten Anbauteiles abhängig von der Analyse ferner das Erkennen (S142) von Änderungen der Konturen eines Anbauteiles und/oder, wenn es sich bei dem Anbauteil um ein Trägersystem handelt, von Konturen einer Ladung des Trägersystems aufweist.

5. Verfahren nach einem der vorangehenden Ansprüche,
**dadurch gekennzeichnet, dass**
das Erkennen (S14) eines im erfassten Bereich montierten Anbauteiles abhängig von der Analyse ferner das Auswerten (S144) der hinsichtlich charakteristischer Merkmale eines Anbauteiles klassifizierten Bereiche ohne Bewegung auf durch ein Anbauteil und/oder, wenn es sich bei dem Anbauteil um ein Trägersystem handelt, durch eine Ladung des Trägersystems verdeckte Bereiche des Fahrzeugs aufweist.

6. Verfahren nach Anspruch 5,
ferner **gekennzeichnet durch** den Schritt des Zurverfügungstellens (S16) von **durch** ein Anbauteil und/oder, wenn es sich bei dem Anbauteil um ein Trägersystem handelt, **durch** eine Ladung des Trägersystems verdeckte Bereiche des Fahrzeugs für Fahrzeugfunktionen, insbesondere eine Funktionseinschränkung eines Fahrerassistenzsystems abhängig von den verdeckten Bereichen.

## Claims

1. A method for the camera-based identification of an add-on part able to be subsequently or additionally mounted on a vehicle, comprising the following steps:
- detection (S10) by means of at least one camera of a region of the vehicle, onto which an add-on part can be mounted,
- analysis (S12) of the images of the detected region produced by the at least one camera with respect to characteristic features of an add-on part, and
- identification (S14) of an add-on part that has been mounted in the detected region in accordance with said analysis, **characterized in that**
the identification of the add-on part that can be mounted on the vehicle includes the identification of a roof carrier system that has been mounted in the detected region and/or of a load of the/of a roof carrier system,
the analysis (S12) of the images of the detected region produced by the at least one camera with respect to characteristic features of an add-on part includes the search (S120) for image regions with movement in the images of the detected region produced by the at least one camera by means of an optical flow method,
the search (S120) for image regions with movement in the images of the detected region produced by the at least one camera by means of an optical flow method comprises the following steps:
- division (S1200) of the images into subregions,
- for each subregion, detection (S1202) whether movement has been identified or not within a predefined period of time, and
- production (S1204) of images with movement intensity based on the preceding detection step, and
the analysis (S12) of the images of the detected region produced by the at least one camera with respect to characteristic features of an add-on part further comprises the following steps:
- identification (S122) of regions without movement in the images with movement intensity,
- classification (S124) of the identified regions without movement with respect to characteristic features of an add-on part.

2. The method according to Claim 1,
**characterized in that**
the identification (S14) of an add-on part that has been mounted in the detected region in accordance with the analysis comprises the evaluation (S140) of the regions without movement that have been classified with respect to characteristic features of an add-on part for contours of an add-on part and/or, if the add-on part is a roof carrier system, for contours of a load of the roof carrier system.

3. The method according to any one of the preceding claims,
**characterized in that**
the analysis of the images of the detected region produced by the at least one camera with respect to characteristic features of an add-on part additionally comprises the following step:
classification of the images produced by the at least one camera or of regions of said images with respect to characteristic features of an add-on part,
and wherein the identification of an add-on part that has been mounted in the detected region in accordance with the analysis comprises the evaluation of the regions that have been classified with respect to characteristic features of an add-on part for contours of an add-on part and/or, if the add-on part is a roof carrier system, for contours of a load of the roof carrier system.

4. The method according to any one of the preceding claims,
**characterized in that**
the identification (S14) of an add-on part that has been mounted in the detected region in accordance with the analysis additionally comprises the identification (S142) of changes to the contours of an add-on part and/or, if the add-on part is a roof carrier system, to contours of a load of the roof carrier system.

5. The method according to any one of the preceding claims,
**characterized in that**
the identification (S14) of an add-on part that has been mounted in the detected region in accordance with the analysis additionally comprises the evaluation (S144) of the regions without movement that have been classified with respect to characteristic features of an add-on part for regions of the vehicle concealed by an add-on part and/or, if the add-on part is a roof carrier system, by a load of the roof carrier system.

6. The method according to Claim 5,
further **characterized by** the step of the supply (S16) of regions of the vehicle concealed by an add-on part and/or, if the add-on part is a roof carrier system, by a load of the roof carrier system, for vehicle functions, in particular a functional restriction of a driver assistance system dependent on the concealed regions.

## Revendications

1. Procédé pour la détection par caméra d'un élément montable sur un véhicule ultérieurement ou de façon additionnelle, avec les étapes suivantes :
- détection (S10) d'une zone du véhicule sur laquelle un élément peut être monté, par au moins une caméra,
- analyse (S12) des images de la zone détectée générées par l'au moins une caméra, relativement à des attributs caractéristiques d'un élément, et
- détection (S14), en fonction de l'analyse, d'un élément monté dans la zone détectée, **caractérisé en ce que**
la détection de l'élément monté sur le véhicule, la détection d'un système support monté dans la zone détectée et/ou d'un chargement du/d'un système support comprennent le fait que l'analyse (S12) des images de la zone détectée générées par l'au moins une caméra, relativement à des attributs caractéristiques d'un élément présente la recherche (S120) de zones d'images avec du mouvement dans les images de la zone détectée générées par l'au moins une caméra au moyen d'une méthode de flux optique,
**en ce que** la recherche (S120) de zones d'images avec du mouvement dans les images de la zone détectée générées par l'au moins une caméra au moyen d'une méthode de flux optique présente les étapes suivantes :
- répartition (S1200) des images en zones partielles,
- détection (S1202), pour chaque zone partielle, du fait de savoir si du mouvement a été détecté ou non pendant une durée spécifiée, et
- génération (S1204) d'images avec intensité de mouvement basé sur l'étape précédente de la détection, et
**en ce que** l'analyse (S12) des images de la zone détectée générées par l'au moins une caméra, relativement aux attributs caractéristiques d'un élément, présente en outre les étapes suivantes :
- détection (S122) de zones sans mouvement dans les images avec intensité de mouvement,
- classification (S124) des zones sans mouvement détectées, relativement à des attributs caractéristiques d'un élément.

2. Procédé selon la revendication 1,
**caractérisé en ce que**
la détection (S14) d'un élément monté dans la zone détectée présente l'évaluation (S140), en fonction de l'analyse, des zones sans mouvement classées relativement à des attributs caractéristiques d'un élément, relativement aux contours d'un élément et/ou, lorsque l'élément est un système support, relativement aux contours d'un chargement du système support.

3. Procédé selon l'une des revendications précédentes,
**caractérisé en ce que**
l'analyse des images de la zone détectée générées par l'au moins une caméra, relativement aux attributs caractéristiques d'un élément, présente en outre l'étape suivante :
classification des images générées par l'au moins une caméra ou de zones de ces images, relativement aux attributs caractéristiques d'un élément,
et la détection d'un élément monté dans la zone détectée présentant l'évaluation, en fonction de l'analyse, des zones classées relativement à des attributs caractéristiques d'un élément, relativement aux contours d'un élément et/ou, lorsque l'élément est un système support, relativement aux contours d'un chargement du système support.

4. Procédé selon l'une des revendications précédentes,
**caractérisé en ce que**
la détection (S14) d'un élément monté dans la zone détectée présente en outre la détection (S142), en fonction de l'analyse, de modifications des contours d'un élément et/ou, lorsque l'élément est un système support, des contours d'un chargement du système support.

5. Procédé selon l'une des revendications précédentes,
**caractérisé en ce que**
la détection (S14) d'un élément monté dans la zone détectée présente en outre l'évaluation (S144), en fonction de l'analyse, des zones sans mouvement classées relativement à des attributs caractéristiques d'un élément, relativement à des zones recouvertes par un élément et/ou, lorsque l'élément est un système support, par un chargement du système support.

6. Procédé selon la revendication 5,
**caractérisé en outre par** l'étape de la mise à disposition (S16) de zones du véhicule recouvertes par un élément et/ou, lorsque l'élément est un système support, par un chargement du système support pour des fonctions de véhicule, en particulier pour une limitation de fonctionnement d'un système d'aide à la conduite, en fonction des zones recouvertes.
